# FASCICULE DE BREVET EUROPEEN

(11) **EP 1 688 636 B1**
(45) Date de publication et mention de la délivrance du brevet: **02.04.2008**
(21) Numéro de dépôt: 06000283.9
(22) Date de dépôt: 09.01.2006
(51) Int. Cl.: F16F 7/116, F16F 7/08, F16D 65/00

(54) **Dispositif anti-vibratoire et structure comportant untel dispositif**
Schwingungsdämpfende Vorrichtung und Struktur mit dieser
Vibration damping device and structure comprising such a device

(30) Priorité: 02.02.2005 FR 0501174
(43) Date de publication de la demande: 09.08.2006
(73) Titulaire: ROBERT BOSCH GMBH, 70442 Stuttgart (DE)
(72) Inventeur: Picot, Pascal, 77170 Brie Conte Robert (FR)
(74) Mandataire: Hurwic, Aleksander Wiktor

(56) Documents cités:
- EP-A- 0 055 678
- EP-A- 0 811 781
- WO-A-03/022516
- DE-A1- 2 914 629
- DE-A1- 4 001 981
- FR-A- 2 836 532
- GB-A- 433 532
- US-A- 3 242 791
- US-A- 3 522 864

## Description

La présente invention se rapporte principalement à un dispositif anti-vibratoire et à une structure comportant un tel dispositif, la structure étant en particulier un disque de frein ou un frein à tambour.

Dans le secteur automobile, le confort des passagers d'une véhicule automobile est une préoccupation majeure, cette préoccupation se traduit par une lutte contre les bruits, en particulier de fonctionnement des différents organes constituant un véhicule automobile. Le dispositif de freinage, en particulier les freins, freins à disque et/ou freins à tambour disposés au niveau des roues sont source de bruit. Du fait de leur disposition et de leur sollicitation, ceux-ci sont très sensibles aux vibrations du véhicules automobile. Les freins sont susceptibles de se mettre à vibrer et de générer un bruit plus ou moins fort, et du fait de la fréquence des freinages, risquant de provoquer une gêne importante.

DE-2914629 **décrit un dispositif anti-vibratoire.**

Il est connu du document FR-A-2836532 un dispositif anti-vibratoire comportant une masse montée à coulissement le long d'une vis vissée dans la structure susceptible de vibrer et un ressort monté en réaction entre une extrémité de la vis et la masse et exerce un effort déterminé sur la masse de manière à appliquer la masse contre la structure. De ce fait, la masse lorsqu'elle est mise ne mouvement, frotte contre la surface de la structure et amortit les vibrations. La masse est montée avec jeu autour de la vis. Ce dispositif donne satisfaction cependant il est souhaitable d'en améliorer l'efficacité.

La présente invention a donc pour but d'offrir un dispositif amortisseur de vibration d'une grande efficacité et de conception simple.

C'est également un but de la présente invention d'offrir une structure, en particulier un frein pour véhicule automobile silencieuse et assurant une grand sécurité de conduite.

Ces buts sont atteint par un dispositif anti-vibratoire comportant une masse, un élément de fixation de la masse à une structure dont il faut amortir les vibrations éventuelles, un moyen pour régler un effort de frottement de la masse contre la structure et des moyens pour faire coopérer par frottement la masse avec le moyen de fixation.

En d'autres termes, le moyen de fixation étant un élément à part entière de la structure et étant fixé à elle de manière rigide, la présente invention utilise le moyen de fixation comme une partie de la structure pour augmenter le contact entre la masse et la structure, augmentant ainsi les efforts de frottement entre la structure et la masse .La dissipation des vibrations dans la structure est plus rapide.

La présente invention a principalement pour objet un dispositif anti-vibratoire apte à être fixé sur une structure, comportant un moyen de fixation dudit dispositif à ladite structure, une masse et un moyen apte à appliquer ladite masse contre la structure selon un effort déterminé caractérisé en ce qu'il comporte également des moyens destinés à accroître les efforts de frottement entre les moyens de fixation et la masse.

La présente invention a principalement pour objet un dispositif anti-vibratoire apte à être fixé sur une structure, comportant un moyen de fixation dudit dispositif à ladite structure, une masse et un moyen apte à appliquer ladite masse contre la structure selon un effort déterminé, caractérisé en ce qu'il comporte également des moyens destinés à accroître les efforts de frottement entre les moyens de fixation et la masse.

La présente invention a également pour objet un dispositif anti-vibratoire caractérisé en ce que la masse est montée autour du moyen de fixation et en ce que les moyens destiné à accroître les efforts de frottement entre les moyens de fixation et la masse comportent au moins une paire de surfaces en vis à vis et portées respectivement par la masse et le moyen de fixation.

La présente invention a également pour objet un dispositif caractérisé en ce que lesdites surfaces sont formées par un filetage pratiqué sur le moyen de fixation et un taraudage pratiqué dans la masse

La présente invention a également pour objet un dispositif caractérisé en ce que le moyen appliquant un effort déterminé à la masse pour la mettre en contact de la structure est un moyen élastique.

La présente invention a également pour objet un dispositif anti-vibratoire caractérisé en ce que le moyen élastique est un ressort hélicoïdal.

La présente invention a également pour objet un dispositif anti-vibratoire caractérisé en ce que, le moyen de fixation est une vis, vissée par une première extrémité dans ladite structure et munie à une deuxième extrémité longitudinale opposée d'une tête et en ce que le ressort hélicoïdal est monté en réaction entre l'écrou et la masse.

La présente invention a également pour objet un dispositif anti-vibratoire caractérisé en ce que la vis comporte une tige filetée, la tête étant formée par un écrou monté à la deuxième extrémité longitudinale, de manière à ce que la charge du ressort soit réglable.

La présente invention a également pour objet un frein pour véhicule automobile comportant un corps, un moyen d'application d'au moins un élément de friction contre un élément entraîné en rotation par la roue du véhicule automobile, un dispositif anti-vibratoire fixé sur le corps caractérisé en ce que le dispositif anti-vibratoire est un dispositif selon l'une quelconque des revendications précédentes.

La présente invention a également pour objet un frein caractérisé en ce que le frein est un frein à disque, en ce que l'élément entraîné en rotation est un disque de frein et en ce que le dispositif anti-vibratoire est fixé sur une chape et/ou un étrier du frein à disque.

La présente invention a également pour objet un frein caractérisé en ce que le frein est un frein à tambour, en ce que l'élément entraîné en rotation est un tambour et en ce que le dispositif anti-vibratoire est fixé sur le plateau.

La présente invention sera mieux comprise à l'aide de la description qui va suivre et des figures annexes sur lesquelles :
- La figure 1 est une vue en coupe axiale d'un exemple de réalisation d'un dispositif anti-vibratoire selon la présente invention. ;
- La figure 2 est une vue de détail de la figure 1 ;
- La figure 3 est une vue générale d'un frein à disque muni d'un dispositif selon la présente invention ;
- La figure 4 est une vue générale d'un frein à tambour muni d'un dispositif selon la présente invention

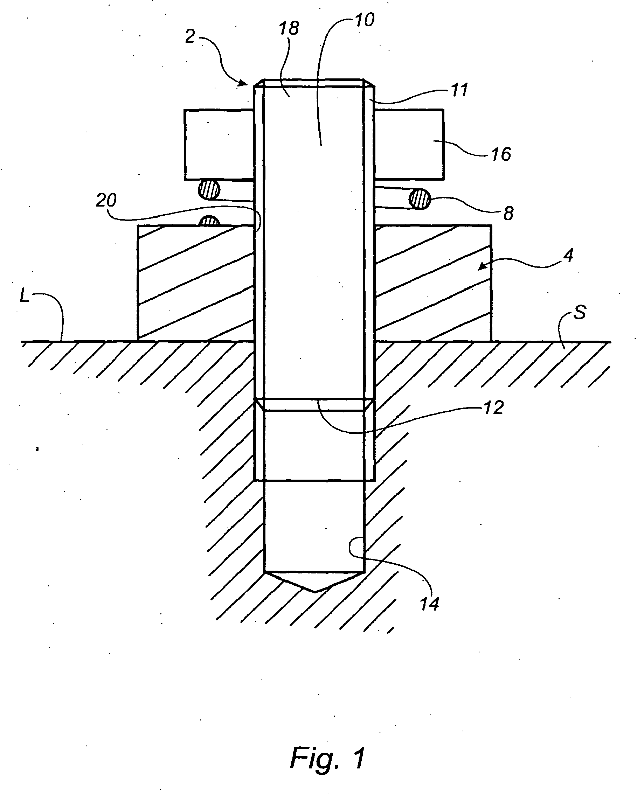

Sur la figure 1, on peut voir un dispositif anti-vibratoire D selon la présente invention comportant un moyen de fixation 2 à une structure S, une masse 4 maintenu en contact d'une surface L de la structure S par un moyen d'application 8 monté en réaction entre le moyen de fixation 2 et la masse 4.

Dans l'exemple représenté, le moyen de fixation est une tige 10 muni d'un filetage 11 sur toute sa longueur. La tige 10 est destinée à être vissée par une première extrémité longitudinale 12 dans un perçage taraudé 14 de la structure S. Un écrou 16 est vissé à une deuxième extrémité longitudinale 18 de la tige 10, opposée à la première extrémité. L'écrou est avantageusement bloqué en rotation par exemple par un adhésif pour éviter qu'il ne se désolidarise de la tige.

Il est bien entendu que l'on peut prévoir que la tige 10 soit collée ou souder à la structure.

La masse 4 est dans l'exemple représenté de forme annuaire et percée d'un passage 20 permettant le montage de la masse 4 autour de la tige 10. Selon la présente invention, le dispositif comporte des moyens permettant d'accroître les forces de frottement entre la tige du moyen de fixation et la masse. Les moyens destinés à augmenter le forces de frottement entre les moyens de fixation et la masse comportent au moins une paire de surfaces en vis-à-vis destinées à venir en contact, une surface de la paire étant portée par la masse et une autre surface de la paire étant portée par le moyen de fixation. Dans l'exemple représenté, les paires de surfaces sont formées par un taraudage 21 et le filetage 11 du moyen de fixation.

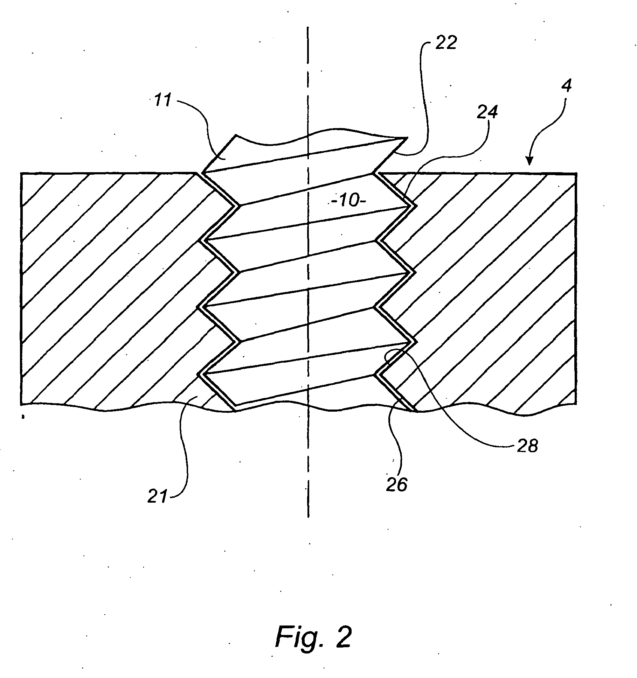

Sur la figure 2, on peut voir le filetage 11 comportant une première 22 et une deuxième 24 surfaces hélicoïdales en regard d'une troisième et quatrième 26,28 surfaces hélicoïdales formant le taraudage 21, respectivement. La première paire de surfaces comprend la première surface 22 et la troisième surface 26 et la deuxième paire comprend la deuxième surface 24 et la quatrième surface 28.

La tige 10 étant fixée rigidement à la structure S, celle-ci est également mise en vibration lorsque la structure vibre et la coopération entre la tige 10 et la masse 4 a pour effet de réduire les vibrations de la structure S.

Il est bien entendu que l'on peut prévoir d'autres moyens pour faire coopérer par frottement la tige et la masse, tels qu'une masse comportant un passage 20 étagé coopérant avec une tige 10 en gradin.(A vérifier SVP)

La présente invention a pour avantage de permettre de régler l'effort exercer par le ressort sur la masse et ainsi d'adapter le dispositif anti-vibratoire en fonction des fréquences de résonance de la structure, puisque la distance entre l'écrou et la surface de la structure est réglable du fait du montage par vissage.

On pourrait prévoir d'utiliser à la place de l'ensemble tige filetée-écrou une vis, cependant on perdrait la facilité de réglage en fréquence du dispositif.

Le dispositif anti-vibratoire selon la présente invention est avantageusement utilisé pour limiter les vibrations d'un frein pour véhicule automobile.

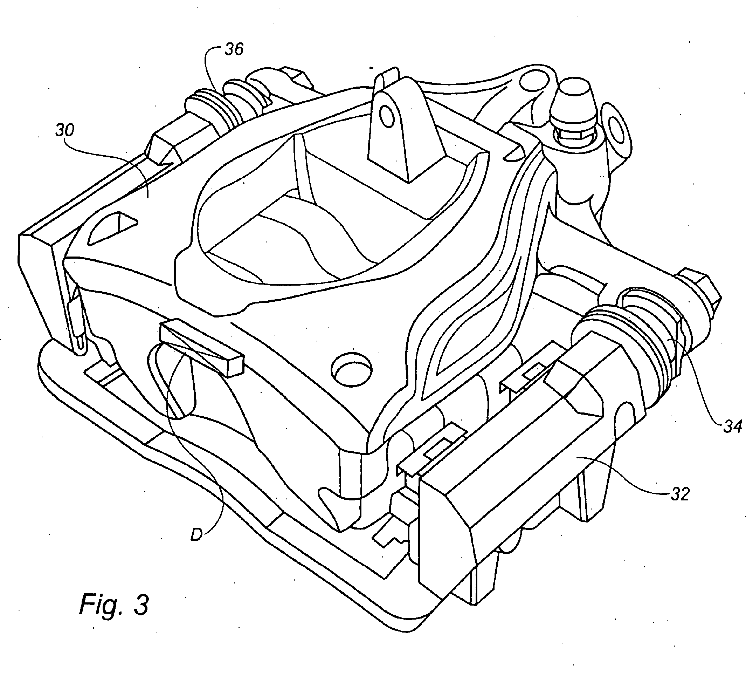

Sur la figure 3, on peut voir un exemple d'un frein à disque selon la présente invention comportant un étrier 30 apte à coulisser par l'intermédiaire de colonnettes 34,36 par rapport à une chape 32 montée fixe sur un porte fusée d'un véhicule automobile. Un piston est monté coulissement dans l'étrier et actionné par exemple par un fluide hydraulique sous pression est destiné à déplacer au moins un premier moyen de friction en direction d'une première face d'un disque de frein, un deuxième moyen de friction est déplacé contre une deuxième face du disque par le coulissement de l'étrier par rapport à la chape.
Le dispositif anti-vibration D selon la présente invention est monté par exemple sur l'étrier et/ou sur la chape, de manière avantageuse sur les parties connaissant les vibrations de plus forte amplitude, par exemple sur le nez d'étrier. Sur la figure 3, le dispositif représenté de manière schématique est monté sur le nez d'étrier.
Le dispositif anti-vibratoire est par exemple fixé à une extrémité d'une colonnette.

Il est bien entendu que la présente invention s'applique également à un frein à disque dit fixe, comportant au moins deux pistons disposés respectivement de part et d'autre du disque de frein.

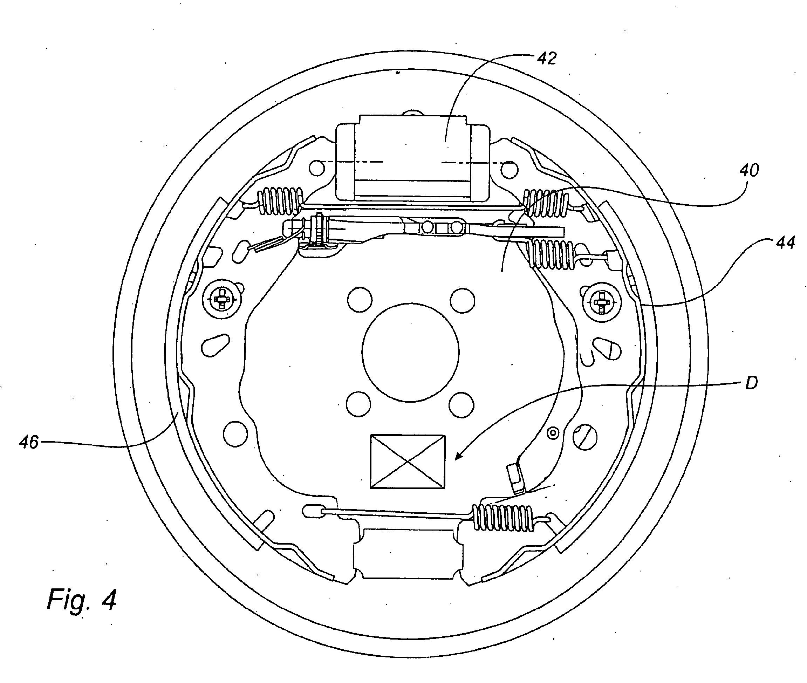

Sur la figure 4, on peut voir un frein à tambour selon la présente invention comportant un plateau 40 muni d'un cylindre de frein 42 apte à déplacer un premier et un deuxième segments 44,46 munis de garnitures en direction d'un tambour (non représenté) solidaire de la roue du véhicule automobile, le cylindre de roue est par exemple actionné par un fluide hydraulique sous pression.

Le dispositif anti-vibratoire D selon la présente invention est fixé dans l'exemple représenté sur le plateau.

Il est bien entendu que l'on peut prévoir plusieurs dispositifs anti-vibratoires selon la présente invention pour un même système à amortir.

Il et bien entendu que le dispositif selon la présente invention s'applique à tout type de structure nécessitant un amortissement des vibrations auxquelles elle est soumise, par exemple une machine-outil.

La présente invention s'applique en particulier aux systèmes de freinage pour véhicules automobiles.

## Revendications

1. Dispositif anti-vibratoire apte à être fixé sur une structure, comportant un moyen de fixation (2) dudit dispositif à ladite structure, une masse (4) et un moyen (8) apte à appliquer ladite masse contre la structure selon un effort déterminé, des moyens destinés à accroître les efforts de frottement entre les moyens de fixation et la masse **caractérisé en ce que** la masse (4) est montée autour du moyen de fixation (2) et **en ce que** les moyens destinés à accroître les efforts de frottement entre les moyens de fixation (2) et la masse (4) comportent au moins une paire de surfaces (22, 28; 24, 26) en vis à vis et portées respectivement par la masse (4) et le moyen de fixation (2), **en ce que** lesdites surfaces sont formées par un filetage (11) pratiqué sur le moyen de fixation et un taraudage (21) pratiqué dans la masse (4), et **en ce que** le moyen (8) appliquant un effort déterminé à la masse pour la mettre en contact de la structure est un moyen élastique.

2. Dispositif anti-vibratoire selon la revendication précédente **caractérisé en ce que** le moyen élastique est un ressort hélicoïdal.

3. Dispositif anti-vibratoire selon la revendication précédentes **caractérisé en ce que**, le moyen de fixation est une vis, vissée par une première extrémité dans ladite structure et munie à une deuxième extrémité longitudinale opposée (18) d'une tête et **en ce que** le ressort hélicoïdal est monté en réaction entre l'écrou (16) et la masse (4).

4. Dispositif anti-vibratoire selon la revendication précédente **caractérisé en ce que** la vis comporte une tige (10) filetée, la tête étant formée par un écrou (16) monté à la deuxième extrémité longitudinale (18), de manière à ce que la charge du ressort soit réglable.

5. Frein pour véhicule automobile comportant un corps, un moyen d'application d'au moins un élément de friction contre un élément entraîné en rotation par la roue du véhicule automobile, un dispositif anti-vibratoire fixé sur le corps **caractérisé en ce que** le dispositif anti-vibratoire est un dispositif selon l'une quelconque des revendications précédentes.

6. Frein selon la revendication précédente **caractérisé en ce que** le frein est un frein à disque, **en ce que** l'élément entraîné en rotation est un disque de frein et **en ce que** le dispositif anti-vibratoire est fixé sur une chape et/ou un étrier du frein à disque.

7. Frein selon la revendication 5 **caractérisé en ce que** le frein est un frein à tambour, **en ce que** l'élément entraîné en rotation est un tambour et **en ce que** le dispositif anti-vibratoire est fixé sur le plateau.

## Claims

1. Anti-vibration device able to be fixed to a structure, comprising a means of fixing (2) the said device to the said structure, a mass (4) and a means (8) able to press the said mass against the structure with a predetermined force, **characterized in that** the mass (4) is mounted around the fixing means (2) and **in that** the means intended to increase the friction forces between the fixing means (2) and the mass (4) comprise at least one pair of opposing surfaces (22,28 ; 24,26) borne one by the mass (4) and one by the fixing means (2), **in that** the said surfaces are formed by a screw thread (11) formed on the fixing means and by a tapped thread (21) formed in the mass (4), and **in that** the means (8) applying a predetermined force to the mass to bring it into contact with the structure is an elastic means.

2. Anti-vibration device according to the preceding claim, **characterized in that** the elastic means is a helical spring.

3. Anti-vibration device according to the preceding claim, **characterized in that** the fixing means is a screw screwed by a first end into the said structure and equipped at a second, opposite, longitudinal end (18), with a head, and **in that** the helical spring is mounted to provide reaction between the nut (16) and the mass (4).

4. Anti-vibration device according to the preceding claim, **characterized in that** the screw comprises a threaded shank (10), the head being formed of a nut (16) mounted at the second longitudinal end (18), so that the load on the spring can be adjusted.

5. Motor vehicle brake comprising a body, a means of pressing at least one friction pad against an element made to rotate by the wheel of the motor vehicle, an anti-vibration device fixed on the body, **characterized in that** the anti-vibration device is a device according to any one of the preceding claims.

6. Brake according to the preceding claim, **characterized in that** the brake is a disk brake, **in that** the element made to rotate is a brake disk and **in that** the anti-vibration device is fixed to a carrier and/or a caliper of the disk brake.

7. Brake according to claim 5, **characterized in that** the brake is a drum brake, **in that** the element made to rotate is a drum and **in that** the anti-vibration device is fixed to the plate.

## Patentansprüche

1. Antivibrationsvorrichtung, die dazu geeignet ist, an einer Struktur befestigt zu sein, mit einem Mittel (2) zur Befestigung der Vorrichtung an der Struktur, einer Masse (4), einem Mittel (8), das dazu geeignet ist, die Masse gemäß einer vorbestimmten Kraft gegen die Struktur zu drücken, und mit Mitteln, die dazu vorgesehen sind, die Reibungskräfte zwischen den Befestigungsmitteln und der Masse zu erhöhen, **dadurch gekennzeichnet, dass** die Masse (4) um das Befestigungsmittel (2) herum angeordnet ist und die Mittel, die dazu vorgesehen sind, die Reibungskräfte zwischen den Befestigungsmitteln (2) und der Masse (4) zu erhöhen, mindestens ein Flächenpaar (22, 28; 24, 26) aufweisen, deren Flächen einander gegenüberliegen und von der Masse (4) bzw. dem Befestigungsmittel (2) getragen sind, dass die Flächen durch ein am Befestigungsmittel ausgebildetes Außengewinde (11) und durch ein in der Masse (4) ausgebildetes Innengewinde (21) gebildet sind und dass das Mittel (8), das eine vorbestimmte Kraft auf die Masse aufbringt, um sie mit der Struktur in Kontakt zu bringen, ein elastisches Mittel ist.

2. Antivibrationsvorrichtung nach dem vorhergehenden Anspruch, **dadurch gekennzeichnet, dass** das elastische Mittel eine Spiralfeder ist.

3. Antivibrationsvorrichtung nach dem vorhergehenden Anspruch, **dadurch gekennzeichnet, dass** das Befestigungsmittel eine Schraube ist, die über ein erstes Ende in die Struktur geschraubt und an einem zweiten, entgegengesetzten Längsende (18) mit einem Kopf versehen ist, und dass die Spiralfeder zwischen der Mutter (16) und der Masse (4) wirkend angebracht ist.

4. Antivibrationsvorrichtung nach dem vorhergehenden Anspruch, **dadurch gekennzeichnet, dass** die Schraube einen Gewindeschaft (10) aufweist, wobei der Kopf durch eine Mutter (16) gebildet ist, die am zweiten Längsende (18) so angebracht ist, dass die Belastung der Feder einstellbar ist.

5. Bremse für ein Kraftfahrzeug, mit einem Körper, einem Mittel, um mindestens ein Reibelement gegen ein Element zu drücken, das vom Kraftfahrzeugrad in Drehung versetzt wird, und mit einer am Körper befestigten Antivibrationsvorrichtung, **dadurch gekennzeichnet, dass** die Antivibrationsvorrichtung eine Vorrichtung nach einem der vorhergehenden Ansprüche ist.

6. Bremse nach dem vorhergehenden Anspruch, **dadurch gekennzeichnet, dass** die Bremse eine Scheibenbremse ist, dass das in Drehung versetzte Element eine Bremsscheibe ist und dass die Antivibrationsvorrichtung an einem Halter und/oder einem Bremssattel der Scheibenbremse befestigt ist.

7. Bremse nach Anspruch 5, **dadurch gekennzeichnet, dass** die Bremse eine Trommelbremse ist, dass das in Drehung versetzte Element eine Trommel ist und dass die Antivibrationsvorrichtung an der Platte befestigt ist.
